Europäisches Patentamt

European Patent Office

Office européen des brevets

(11) Numéro de publication : **0 313 432 B1**

# (12) FASCICULE DE BREVET EUROPEEN

(45) Date de publication du fascicule du brevet :
15.07.92 Bulletin 92/29

(51) Int. Cl.⁵ : **B60R 22/40**

(21) Numéro de dépôt : **88402524.8**

(22) Date de dépôt : **05.10.88**

(54) **Détecteur à bille pour enrouleur de sangle de ceinture de sécurité notamment pour véhicule automobile.**

(30) Priorité : **20.10.87 FR 8714451**

(43) Date de publication de la demande :
**26.04.89 Bulletin 89/17**

(45) Mention de la délivrance du brevet :
**15.07.92 Bulletin 92/29**

(84) Etats contractants désignés :
**DE ES GB IT SE**

(56) Documents cités :
**DE-A- 2 400 875**
**FR-A- 2 248 961**
**US-A- 29 147**
**US-A- 4 258 887**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Joly, Jean Marcel**
**10 rue de Besançon**
**F-25150 Pont-de-Roide (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention concerne un détecteur à bille pour enrouleur de sangle de ceinture de sécurité notamment pour véhicule automobile.

On connait déjà dans l'état de la technique un certain nombre de détecteurs à bille du type comportant une structure de support comprenant un siège pour la bille, un levier de verrouillage, articulé autour d'un axe de rotation sur la structure de support, et déplaçable par la bille entre une position escamotée et une position de blocage de l'enrouleur.

Dans les dispositifs connus, la structure de support comporte deux bras munis d'évidements à travers lesquels s'étendent les extrémités correspondantes d'une tige traversant le levier de verrouillage, et constituant l'axe de rotation de ce levier de verrouillage sur la structure de support.

Cependant, ce type de montage présente un certain nombre d'inconvénients notamment au niveau de sa fabrication et de son montage. En effet, la fabrication de telles pièces par moulage, nécessite l'utilisation de tiroirs pour former les évidements dans lesquels s'étendent les extrémités de la tige de rotation du levier. Par ailleurs, le montage de la tige à l'intérieur des évidements des bras de la structure de support et du levier de verrouillage est relativement complexe et long.

Un état de la technique est illustré par le document FR-A-2 248 961. Les éléments divulgués par ce document et qui sont nécessaires à l'invention sont exposés dans le préambule de la revendication principale.

Le but de l'invention est donc de résoudre ces problèmes en proposant un détecteur à bille dont la structure soit simple, fiable et qui puisse être fabriqué et monté facilement tout en étant d'un prix de revient faible.

A cet effet l'invention a pour objet un détecteur à bille du type tel que décrit précédemment et dont les particularités ressortent notamment de la partie caractérisante de celle-ci.

L'invention sera mieux comprise à l'aide de la description qui va suivre donnée uniquement à titre d'exemple et faite en se référant aux dessins annexés, sur lesquels :

    – la figure 1 représente une vue de côté en coupe d'un détecteur à bille selon l'invention ; et

    – la figure 2 représente une vue de dessus d'un levier de verrouillage entrant dans la constitution d'un détecteur à bille selon l'invention.

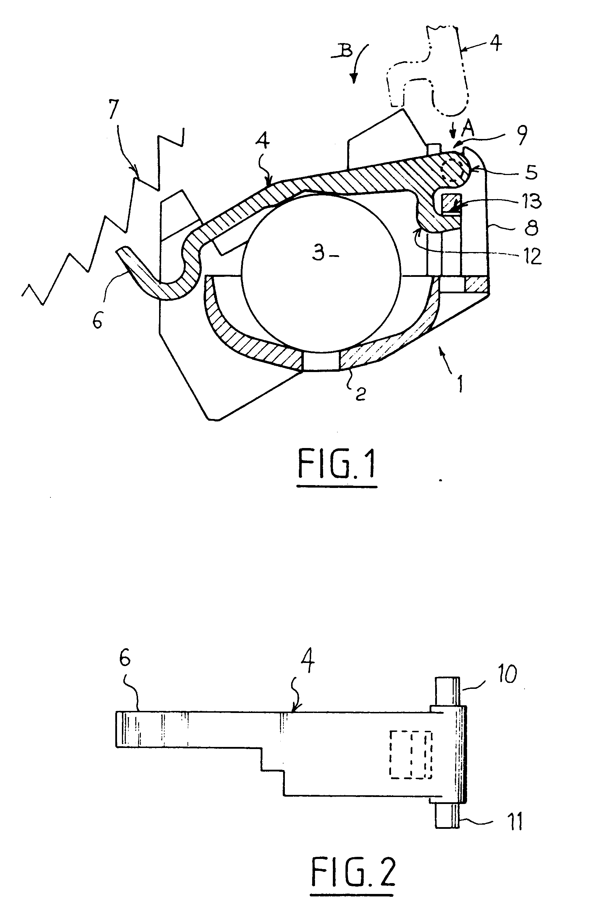

Ainsi qu'on peut le voir sur la figure 1, un détecteur à bille pour enrouleur de sangle de ceinture de sécurité notamment pour véhicule automobile, comporte une structure de support 1 comprenant un siège 2 pour une bille 3, un levier de verrouillage 4 articulé en 5 sur la structure de support et déplaçable par la bille 3 entre une position escamotée représentée sur cette figure et une position de blocage de l'enrouleur, dans laquelle l'extrémité 6 du levier de verrouillage coopère avec des dents d'une roue 7 de blocage de l'enrouleur.

Selon l'invention la structure de support comporte deux bras dont un seul 8 est représenté, à l'extrémité desquels sont ménagées des encoches 9 de réception de parties en saillie 10, 11 (Fig. 2) du levier de verrouillage 4, par exemple venues de moulage avec celui-ci. Ces parties en saillie 10 et 11 constituent l'axe de rotation du levier de verrouillage 4 sur la structure de support.

Par ailleurs, le levier 4 comporte également un crochet 12 adapté pour coopérer avec une surface de butée 13 de la structure de support, s'étendant sous l'axe de rotation du levier sur la structure de support. Ce crochet et cette surface de butée de la structure de support permettent de maintenir les parties en saillie 10, 11 du levier en position dans les encoches 9 des bras de la structure de support.

Une fois le détecteur à bille monté sur l'enrouleur, le levier de verrouillage 4 ne peut plus se dégager de la structure de support. En effet, en cas de retournement par exemple du véhicule automobile, l'extrémité 6 du levier de verrouillage vient en appui contre la roue de blocage 7 de l'enrouleur, bloquant ainsi celui-ci et à l'autre extrémité, le crochet 12 du levier de verrouillage et la surface de butée 13 le maintiennent en position.

Dans le mode de réalisation représenté, la surface de butée est constituée par une face d'une tige de blocage s'étendant entre les deux bras de la structure de support, sous l'axe de rotation du levier, et les encoches débouchent à l'extrémité des bras. D'autres modes de réalisation sont possibles.

La mise en place du levier 4 sur la structure de support se fait avant le montage du détecteur sur l'enrouleur, en présentant le levier comme illustré en traits interrompus sur la figure 1, en introduisant les parties en saillie de celui-ci dans les encoches des bras suivant la flèche A, puis en faisant pivoter le levier suivant la flèche B, de manière à amener le crochet en engagement avec la surface de butée.

On conçoit donc que la réalisation des pièces entrant dans la constitution de ce détecteur est aisée et ne nécessite pas de matériel très complexe à mettre en oeuvre et que le montage du levier sur la structure de support est très facile et très rapide.

## Revendications

1. Détecteur à bille pour enrouleur de sangle de ceinture de sécurité notamment pour véhicule automobile, du type comportant une structure de support (1) comprenant un siège (2) pour une bille (3), un levier (4) de verrouillage, articulé (en 5) autour d'un axe de rotation sur la structure de support (1), et déplaçable par la bille (3) entre une position escamotée et une position de blocage de l'enrouleur et comportant deux bras (8) à l'extrémité desquels sont ménagées des encoches (9) de réception de parties en saillie (10, 11) du levier (4), constituant l'axe de rotation de celui-ci, détecteur caractérisé en ce que le levier comporte une partie en forme de crochet (12) adapté pour coopérer en position montée avec une surface de butée (13) de la structure de support (1), pour maintenir les parties en saillie du levier en position dans les encoches.

2. Détecteur selon la revendication 1, caractérisé en ce que la surface de butée (13) est constituée par une face d'une tige de blocage s'étendant entre les deux bras de la structure de support, sous l'axe de rotation du levier sur la structure de support

3. Détecteur selon la revendication 2, caractérisé en ce que le encoches (9) débouchent à l'extrémité des bras (8).

**Patentansprüche**

1. Kugelsensor für Sicherheitsgurtaufroller, insbesondere für Kraftfahrzeuge, bestehend aus einem Trägerkörper (1), der einen Sitz (2) für eine Kugel (3), einen Verriegelungshebel (4), der (bei 5) über eine Drehachse an dem Trägerkörper (1) angelenkt ist und durch die Kugel (3) zwischen einer ausgerückten Stellung und einer Stellung der Blockierung des Aufrollers bewegbar ist, und zwei Arme (8) aufweist, an deren Ende Aussparungen (9) zur Aufnahme der vorstehenden Teile (10, 11) des Hebels (4) vorgesehen sind, die dessen Drehachse bilden, dadurch gekennzeichnet, daß der Hebel einen hakenförmigen Teil (12) besitzt, der in montierter Stellung mit einer Anschlagsfläche (13) des Trägerkörpers (1) zusammenwirken kann, um die vorstehenden Teile des Hebels in den Ausspa rungen in Stellung zu halten.

2. Sensor nach Anspruch 1, dadurch gekennzeichnet, daß die Anschlagsfläche (13) von einer fläche einer Blockier stange gebildet ist, die sich zwischen den beiden Armen des Trägerkörpers unter der Drehachse des Hebels erstreckt, über die der Hebel an den Trägerkörper angelenkt ist.

3. Sensor nach Anspruch 2, dadurch gekennzeichnet, daß die Aussparungen (9) am Ende der Arme (8) offen sind.

**Claims**

1. A ball detector for a safety-belt strap reeling mechanism for a motor vehicle in particular, of the type comprising a supporting structure (1) including a seat (2) for a ball (3), a locking lever (4) articulated (at 5) round a swivel pin on the supporting structure (1) and displaceable by the ball (3) between a retracted position and a position for locking the reeling mechanism and including two arms (8), at the ends whereof there are arranged notches (9) for receiving the projecting parts (10, 11) of the lever (4) which constitute the swivel pin of the latter, which detector is characterized in that the lever includes a hook-shaped part (12) adapted to cooperate in the mounted position with a stop surface (13) of the supporting structure (1) for maintaining the projecting parts of the lever in position in the notches.

2. A detector according to claim 1, characterized in that the stop surface (13) is constituted by a face of a locking rod extending between the two arms of the supporting structure, under the swivel pin of the lever on the supporting structure.

3. A detector according to claim 2, characterized in that the notches (9) open out at the ends of the arms (8).

FIG.1

FIG.2